# EUROPÄISCHE PATENTSCHRIFT

(11) **EP 2 461 462 B1**
(45) Veröffentlichungstag und Bekanntmachung des Hinweises auf die Patenterteilung: **20.05.2015**
(21) Anmeldenummer: 11185996.3
(22) Anmeldetag: 20.10.2011
(51) Int. Cl.: H02K 1/27, H02K 29/03

(54) **Rastmomentreduzierter Permanentmagnetmotor**
Permanent magnetic motor with reduced detent torque
Moteur à aimant permanent à couple de détente réduit

(30) Priorität: 03.12.2010 DE 102010053364
(43) Veröffentlichungstag der Anmeldung: 06.06.2012
(73) Patentinhaber: C. & E. Fein GmbH, 73529 Schwäbisch Gmünd-Bargau (DE)
(72) Erfinder: Dietl, Dr. Lothar, 73431 Aalen (DE); Schreiber, Dr. Alfred, 73230 Kirchheim (DE)
(74) Vertreter: Meitinger, Thomas Heinz

(56) Entgegenhaltungen:
- EP-A2- 2 144 350
- WO-A1-2005/119879
- WO-A1-2007/010948
- WO-A2-01/63726
- DE-A1- 19 846 924
- DE-A1-102005 048 731
- GB-A- 2 468 718
- US-A- 5 397 951
- US-A1- 2006 028 083
- US-A1- 2009 015 091
- US-A1- 2010 026 124

## Beschreibung

### GEBIET DER ERFINDUNG

Die vorliegende Erfindung betrifft einen Permanentmagnetmotor und ein Elektrowerkzeug.

### HINTERGRUND DER ERFINDUNG

Im Stand der Technik sind Permanentmagnetmotoren bekannt, die einen Läufer mit einem Permanentmagneten und einen Ständer mit Ständerwicklungen aufweisen. Permanentmagnetmotoren können z.B. als bürstenloser Gleichstrommotor (EC-Motor) oder als Permanentmagnetsynchronmotor ausgebildet sein.

Das Dokument DE 19846924 A1 beschreibt eine permanentmagneterregte Baugruppe einer elektrischen Maschine und Verfahren zu ihrer Herstellung. Das Dokument WO 2007/010948 A1 beschreibt eine Vorgehensweise, um die Leistung eines bürstenlosen Motors zu steigern. Hierzu weist der Rotor des bürstenlosen Motors Nuten auf, in die Magnete eingesetzt sind. Das Patent US 2010/0026124 A1 zeigt einen Rotor eines bürstenlosen Motors.

### ZUSAMMENFASSUNG DER ERFINDUNG

Permanentmagnetmotoren mit einem gezahnten Stator weisen in der Regel Rastmomente auf, die sich aufgrund der Geometrie des Stators und aus den Eigenschaften der Werkstoffe des Magnetkreises ergeben können. Diese Rastmomente überlagern das Nutzdrehmoment und können zu einem Pendeln bzw. zu Pulsationen des Gesamtdrehmoments führen. Derartige Drehmomentpulsationen sind zumeist unerwünscht, da diese zu unerwünschten Vibrationen bzw. Geräuschentwicklung führen können. Außerdem kann das Rastmoment die Verlustleistungen im Eisen vergrößern. Ferner kann ein verringertes Rastmoment zu einer besseren Regelbarkeit bzw. Positioniergenauigkeit des Motors führen.

Im Stand der Technik sind verschiedene Methoden bekannt, um eine Reduzierung des unerwünschten Rastmoments bei einer gezahnten Statorgeometrie erreichen zu können. Es gibt z.B. die Verfahren einer Schrägmagnetisierung, einer Schrägnutung, einer Luftspaltvergrößerung, einer unsymmetrischen Anbringung der Permanentmagneten und eine Einschränkung auf eine spezielle Nutzahl bzw. Polpaarzahlkombination. Diese Verfahren führen zwar dazu, dass das Rastmoment reduziert werden kann, jedoch wird auch das Nutzdrehmoment zum Teil drastisch verringert. Eine weitere Problematik dieser Methoden kann ihr hoher fertigungstechnischer Aufwand bei der Herstellung der Permanentmagnetmotoren sein. Nachteilig ist außerdem, dass eine Skalierbarkeit, also eine beliebige Erweiterbarkeit des Motors zur Steigerung des Nutzdrehmoments, zumeist nicht gegeben ist.

Eine Aufgabe ist daher einen Permanentmagnetmotor zur Verfügung zu stellen, der ein möglichst kleines Rastmoment bei einem dennoch großen Nutzdrehmoment zur Verfügung stellen kann, wobei der Permanentmagnetmotor einen fertigungstechnisch vertretbarem Aufwand bei der Herstellung und eine nahezu beliebige Skalierbarkeit aufweisen soll.

Als erste Ausführungsform der Erfindung wird ein Permanentmagnetmotor zur Verfügung gestellt, umfassend: einen Läufer, wobei der Läufer weichmagnetisches Material und einen ersten Permanentmagneten umfasst und einen Ständerpolschuh, wobei an dem Ständerpolschuh eine Ständerwicklung zur Erzeugung eines magnetischen Feldes angeordnet ist, wobei zwischen Läufer und Ständerpolschuh ein Luftspalt ausgebildet ist, wobei eine nach außen gerichtete Oberfläche des ersten Permanentmagneten durch ein erstes Flussleitstück aus weichmagnetischem Material teilweise bedeckt ist und wobei das erste Flussleitstück in axialer Richtung eine allmähliche Änderung oder eine sprunghafte Änderung der Überlappung der Permanentmagnete zur Reduzierung des Rastmoments aufweist.

Durch eine Variation der Form der Überlappung des ersten Permanentmagneten entlang der axialen Richtung kann der Läufer der Ständergeometrie weiter angepasst werden, wodurch ein noch kleineres Rastmoment erhalten werden kann.

Bei einem Permanentmagnetmotor kann ein Flussleitstück derart angeordnet werden, dass es einen Permanentmagneten eines Läufers mechanisch festhalten kann. Das Flussleitstück bedeckt dabei die Oberfläche des Permanentmagneten nur teilweise, sodass zumindest teilweise die Oberfläche des Permanentmagneten freiliegt. Hierdurch kann das Rastmoment bei nur wenig reduziertem Nutzdrehmoment deutlich verringert werden.

Als zweite Ausführungsform der Erfindung wird ein Elektrowerkzeug zur Verfügung gestellt, umfassend einen Permanentmagnetmotor nach einem der Ansprüche 1 bis 9.

Beispielhafte Ausführungsformen werden in den abhängigen Ansprüchen beschrieben.

In einer weiteren erfindungsgemäßen Ausführungsform wird ein Permanentmagnetmotor zur Verfügung gestellt, wobei das erste Flussleitstück in radialer Richtung ein abgeflachtes Ende aufweist.

Aufgrund eines abgeflachten Endes des Flussleitstückes kann eine Verbesserung der Leitung des magnetischen Flusses innerhalb des Permanentmagnetmotors erreicht werden.

Gemäß einer beispielhaften Ausführungsform der Erfindung wird ein Permanentmagnetmotor zur Verfügung gestellt, wobei der erste Permanentmagnet einen geometrischen Körper vom Typ eines Brotlaibs oder eines Quaders aufweist oder dass der erste Permanentmagnet ein Oberflächenmagnet ist.

Eine besondere Ausgestaltung des geometrischen Körpers der Permanentmagneten des Läufers kann zu einer Anpassung des Läufers an die Ständergeometrie führen, wodurch eine weitere Reduzierung des Rastmoments erzielt werden kann.

Gemäß einem weiteren Ausführungsbeispiel der vorliegenden Erfindung wird ein Permanentmagnetmotor zur Verfügung gestellt, wobei der Permanentmagnetmotor ein zweites Flussleitstück aus weichmagnetischem Material umfasst, wobei der erste Permanentmagnet durch das erste Flussleitstück und das zweite Flussleitstück teilweise bedeckt ist.

Die Anordnung von zwei Flussleitstücken, die von zwei Seiten kommend den Permanentmagneten halten können, führt zu einer erhöhten mechanischen Stabilität, wodurch höhere Drehzahlen des Läufers ermöglicht werden können. Die beiden Flussleitstücke bedecken den Permanentmagneten nur teilweise, sodass ein Teil der Oberfläche des Permanentmagneten gegenüber dem Luftspalt freiliegt.

Gemäß einer beispielhaften Ausführungsform der Erfindung wird ein Permanentmagnetmotor zur Verfügung gestellt, wobei das erste Flussleitstück zum zweiten Flussleitstück symmetrisch oder unsymmetrisch bezüglich einer Schnittebene des Permanentmagnetmotors ausgebildet ist.

Eine symmetrische Ausbildung der Flussleitstücke kann zu einer fertigungstechnisch einfacher darstellbaren Bauweise führen, wodurch die Herstellungskosten gesenkt werden können.

In einer weiteren erfindungsgemäßen Ausführungsform wird ein Permanentmagnetmotor zur Verfügung gestellt, wobei durch das erste Flussleitstück ein größerer Bereich des ersten Permanentmagneten bedeckt ist als durch das zweite Flussleitstück.

Eine unsymmetrische Ausführungsform eines Läufers kann bei Permanentmagnetmotoren, die nur in einer Rotationsrichtung eingesetzt werden, wie z.B. Winkelschleifmaschinen oder Kreissägen, eine Anpassung an die ausschließliche Rotationsrichtung bedeuten, wodurch sich ein mechanisch stabilerer Permanentmagnetmotor mit einem noch kleineren Rastmoment ergeben kann.

Gemäß einem weiteren Ausführungsbeispiel der vorliegenden Erfindung wird ein Permanentmagnetmotor zur Verfügung gestellt, wobei der Permanentmagnetmotor einen zweiten Permanentmagneten umfasst, wobei eine nach außen gerichtete Oberfläche des zweiten Permanentmagneten durch ein drittes Flussleitstück aus weichmagnetischem Material teilweise bedeckt ist, wobei das erste Flussleitstück und das dritte Flussleitstück benachbart ausgebildet sind und zwischen dem ersten Flussleitstück und dem dritten Flussleitstück eine Aussparung angeordnet ist.

Eine Aussparung, die zwischen zwei benachbarten Flussleitstücken angeordnet ist, kann den magnetischen Fluss zwischen zwei entgegen gesetzten Polen zweier Permanentmagneten des Läufers reduzieren, wodurch das erreichbare Nutzdrehmoment des Permanentmagnetmotors erhöht werden kann.

Gemäß einer beispielhaften Ausführungsform der Erfindung wird ein Permanentmagnetmotor zur Verfügung gestellt, wobei die Aussparung als V-Einkerbung, halbkreisförmig, halbkugelförmig, pyramidenförmig oder quaderförmig ausgeformt ist.

Eine Aussparung, die als V-Einkerbung ausgebildet ist, kann fertigungstechnisch einfach hergestellt werden. Eine quaderförmige Aussparung zwischen zwei benachbarten Flussleitstücken führt zu einer weiteren Verringerung des magnetischen Flusses zwischen zwei benachbarten Permanentmagneten.

Gemäß einem weiteren Ausführungsbeispiel der vorliegenden Erfindung wird ein Permanentmagnetmotor zur Verfügung gestellt, wobei die nach außen gerichtete Oberfläche des ersten Permanentmagneten zu zwischen 5% und 50%, vorzugsweise zu zwischen 15% und 30%, weiter vorzugsweise zu zwischen 20% und 25% bedeckt ist.

Es kann einPermanentmagnetmotor bereitgestellt werden, der einen Rotor (Läufer) aus einem weichmagnetischen Material umfasst, wobei in das weichmagnetische Material zumindest ein Permanentmagnet eingebettet sein kann. Der Permanentmagnet ist in radialer Richtung zumindest abschnittsweise, aber nicht vollständig, von dem weichmagnetischen Material umschlossen. Vorteilhafterweise kann hierdurch der Permanentmagnet durch überlappende Bereiche des weichmagnetischen Materials gehalten werden, wodurch auch hohe Drehzahlen des Rotors ermöglicht werden. Ferner kann durch die Aussparung des weichmagnetischen Materials, wodurch der Permanentmagnet gegenüber dem Stator (Ständer) teilweise freiliegt, das Rastmoment verringert werden. Es können beispielsweise zwei übergreifende Bereiche des weichmagnetischen Materials ausgebildet werden, die den Permanentmagneten halten können und symmetrisch oder unsymmetrisch bezüglich einer Schnittebene des Permanentmagnetmotors ausgebildet sein können. In einer alternativen Ausführungsform kann ein erster übergreifender Bereich länger ausgebildet sein als ein zweiter übergreifender Bereich eines Permanentmagneten. Die übergreifenden Bereiche können in einer weiteren alternativen Ausführungsform in axialer Richtung Vorsprünge und/oder Aussparungen aufweisen. Insgesamt kann sich ein Permanentmagnetmotor ergeben, der ein deutlich reduziertes Rastmoment, z.B. Verringerung des Rastmoments um 50%, bei kaum verringertem Nutzdrehmoment, Verringerung des Nutzdrehmoments um ca. 5%, aufweisen kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 einen Läufer des Stands der Technik,
Fig. 2 einen Teil eines Querschnitts eines Permanentmagnetmotors des Stands der Technik,
Fig. 3 einen Teil eines Querschnitts eines erfindungsgemäßen Permanentmagnetmotors,
Fig. 4 einen Querschnitt eines weiteren erfindungsgemäßen Permanentmagnetmotors,
Fig. 5 einen Teil eines Querschnitts eines erfindungsgemäßen Permanentmagnetmotors,
Fig. 6 einen Teil eines Querschnitts eines weiteren erfindungsgemäßen Permanentmagnetmotors,
Fig. 7 einen Teil eines Querschnitts eines weiteren erfindungsgemäßen Permanentmagnetmotors,
Fig. 8 einen Teil eines Querschnitts eines weiteren erfindungsgemäßen Permanentmagnetmotors,
Fig. 9 einen Läufer eines erfindungsgemäßen Permanentmagnetmotors in perspektivischer Ansicht,
Fig. 10 eine Seitenansicht eines Läufers eines erfindungsgemäßen Permanentmagnetmotors,
Fig. 11 eine Seitenansicht eines Läufers eines weiteren erfindungsgemäßen Permanentmagnetmotors,
Fig. 12 eine Seitenansicht eines Läufers eines weiteren erfindungsgemäßen Permanentmagnetmotors,
Fig. 13 einen Teil eines Querschnitts eines weiteren erfindungsgemäßen Permanentmagnetmotors,
Fig. 14 einen Teil eines Querschnitts eines weiteren erfindungsgemäßen Permanentmagnetmotors,
Fig. 15 einen Teil eines Querschnitts eines weiteren erfindungsgemäßen Permanentmagnetmotors,
Fig. 16 einen Teil eines Querschnitts eines weiteren erfindungsgemäßen Permanentmagnetmotors.

### DETAILLIERTE BESCHREIBUNG BEISPIELHAFTER AUSFÜHRUNGSFORMEN

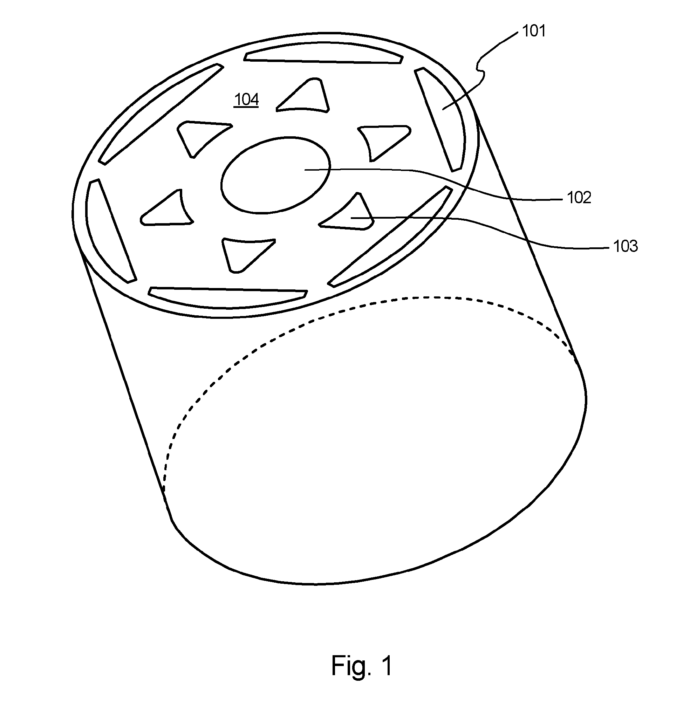

Fig. 1 zeigt einen Läufer (Rotor) eines Permanentmagnetmotors des Stands der Technik aus einem weichmagnetischen Material 104, in das Permanentmagneten 101 eingebettet sein können. In radialer Richtung ist bei einem Läufer des Stands der Technik zwischen Permanentmagneten 101 und Luftspalt über die gesamte Ausdehnung des Permanentmagneten 101 weichmagnetisches Material 104 angeordnet. Hierdurch kann sichergestellt werden, dass bei hohen Drehzahlen die Permanentmagneten 101 nicht durch Fliehkräfte aus dem Läufer heraus geschleudert werden können. Der Läufer weist eine axial verlaufende Aussparung 102 zur Aufnahme einer Welle auf. Außerdem können am Läufer weitere Aussparungen 103 angeordnet werden, die beispielsweise der Gewichtsreduktion des Läufers dienen können. In einer alternativen Ausführungsform eines Läufers des Stands der Technik sind die Permanentmagneten auf weichmagnetisches Material des Läufers aufgeklebt, wodurch eine fertigungstechnisch weniger aufwändige Herstellung ermöglicht werden kann. Allerdings können bei dieser Ausführungsform aufgrund der fehlenden Fliehkraftkompensation durch eine Einbettung der Permanentmagneten keine hohen Drehzahlen realisiert werden.

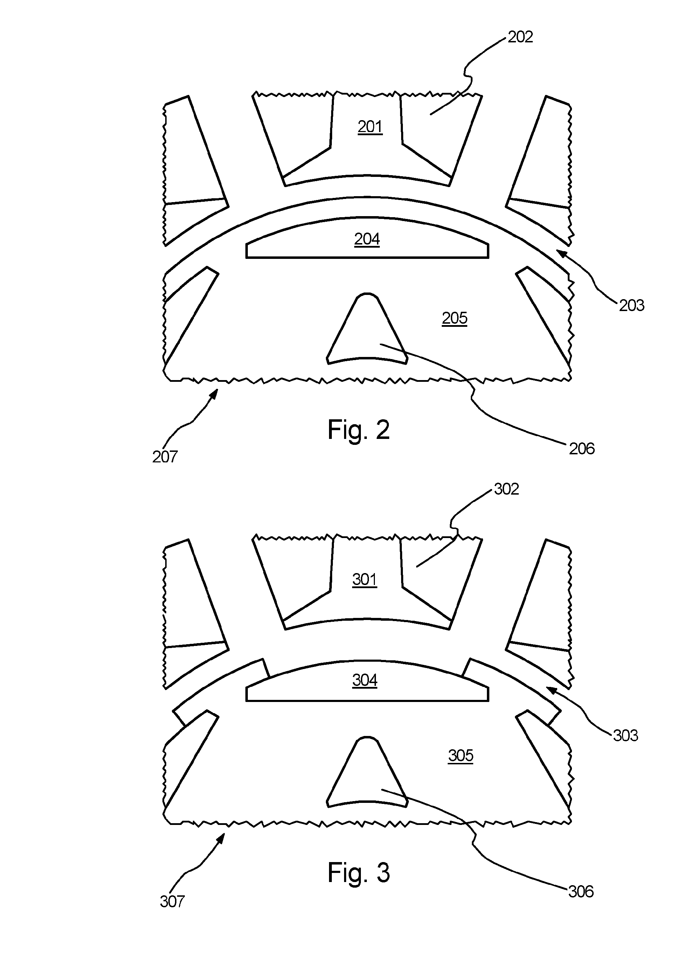

Fig. 2 zeigt einen Teil eines Querschnitts eines Permanentmagnetmotors des Stands der Technik mit einem Läufer 207, der ein weichmagnetisches Material 205 aufweist in das Permanentmagneten 204 eingebettet sein können. In radialer Richtung ist zwischen Permanentmagnet 204 und Luftspalt 203 stets weichmagnetisches Material 205 angeordnet. Der Läufer 207 kann Aussparungen 206 aufweisen, die z. B. eine Gewichtsersparnis des Läufers 207 zur Folge haben können. Ständerwicklungen 202 können ein Magnetfeld erzeugen, das durch Ständerpolschuhe 201 geführt werden kann.

Fig. 3 zeigt einen Teil eines Querschnitts eines Permanentmagnetmotors mit einem Läufer 307. Der Läufer 307 umfasst weichmagnetisches Material 305 in das Permanentmagnete 304 angeordnet sein können. Erfindungsgemäß greift das weichmagnetische Material 305 über die Permanentmagneten 304, wodurch eine mechanische Haltefunktion erreicht werden kann. Hierdurch kann der Läufer 307 auch hohen Drehzahlen ausgesetzt werden ohne dass die Permanentmagneten 304 durch Fliehkräfte aus dem Läufer 307 heraus geschleudert werden. Der Läufer 307 weist in radialer Richtung Bereiche auf, bei denen zwischen Permanentmagneten 304 und Luftspalt 303 weichmagnetisches Material 305 angeordnet ist. Außerdem sind Bereiche vorhanden bei denen in radialer Richtung zwischen Permanentmagneten 304 und Luftspalt 303 kein weichmagnetisches Material 305 angeordnet ist. Die die Permanentmagneten 304 teilweise überlappenden Bereiche aus weichmagnetischen Material erfüllen nicht nur eine mechanische Haltefunktion für die Permanentmagneten 304. Die teilweise Überlappung der Permanentmagneten 304 führt außerdem dazu, dass das Rastmoment des erfindungsgemäßen Permanentmagnetmotors reduziert werden kann. Es hat sich herausgestellt, dass ein minimales Rastmoment erreicht werden kann, wenn ein bestimmter Überlappungsgrad ausgebildet wird. Dieser optimale Überlappungsgrad ist nicht Null und auch eine vollständige Überlappung führt nicht zu einem kleinstmöglichen Rastmoment. Vorzugsweise wird eine Überlappung zwischen 5% und 50% gewählt, wobei sich ein minimiertes Rastmoment bei einer Überlappung von 15% bis 30% und ein minimales Rastmoment bei einer Überlappung von 20% bis 25% bei z.B. Permanentmagneten des Typs Brotlaib oder Oberflächenmagneten ergeben kann. Der Ständer umfasst Ständerpolschuhe 301 an denen Ständerwicklungen 302 angeordnet sind.

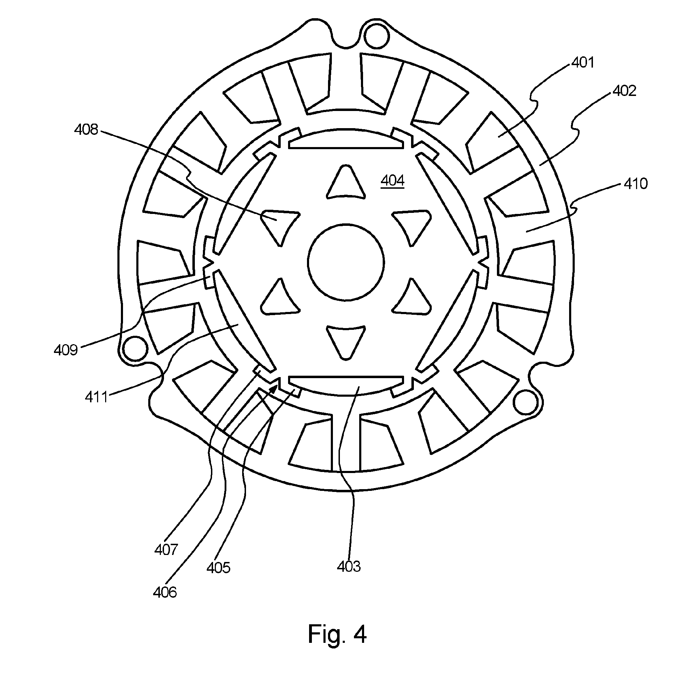

Fig. 4 zeigt einen Querschnitt eines Permanentmagnetmotors mit einem Ständer 402 dessen Ständerpolschuhe 410 mit Ständerwicklungen 401 versehen sein können, um z.B. ein Ständerdrehfeld erzeugen zu können. Der Läufer 404 weist Permanentmagnete 403, 411 auf, die in das weichmagnetische Material des Läufers 404 zumindest teilweise eingebettet sein können. Der Läufer 404 weist Flussleitstücke 405, 407, 409 aus weichmagnetischen Material auf, die eine mechanische Haltefunktion für die Permanentmagneten 403, 411 erfüllen können und außerdem durch ihre nur teilweise Überlappung der zum Luftspalt gewandten Oberfläche der Permanentmagneten 403, 411 eine Reduzierung des Rastmoments im Vergleich zu einer vollständigen oder keiner Überdeckung erzielen können. Die Flussleitstücke 407, 409 eines Permanentmagneten 411 können symmetrisch oder unsymmetrisch bezüglich einer Schnittebene des Permanentmagnetmotors ausgebildet sein. Es kann ein erstes Flussleitstück 407 den Permanentmagneten 411 weiter überlappen als ein zweites Flussleitstück 409. Zwischen benachbarten Flussleitstücken 405, 407 können Aussparungen 406 angeordnet sein, wobei die Aussparungen 406 z.B. als V-Einkerbungen, halbkreisförmig, halbkugelförmig, pyramidenförmig oder quaderförmig ausgeformt sein können. Durch die Aussparungen 406 kann ein magnetischer Fluss zwischen benachbarten Permanentmagneten 403, 411 verhindert bzw. reduziert werden.

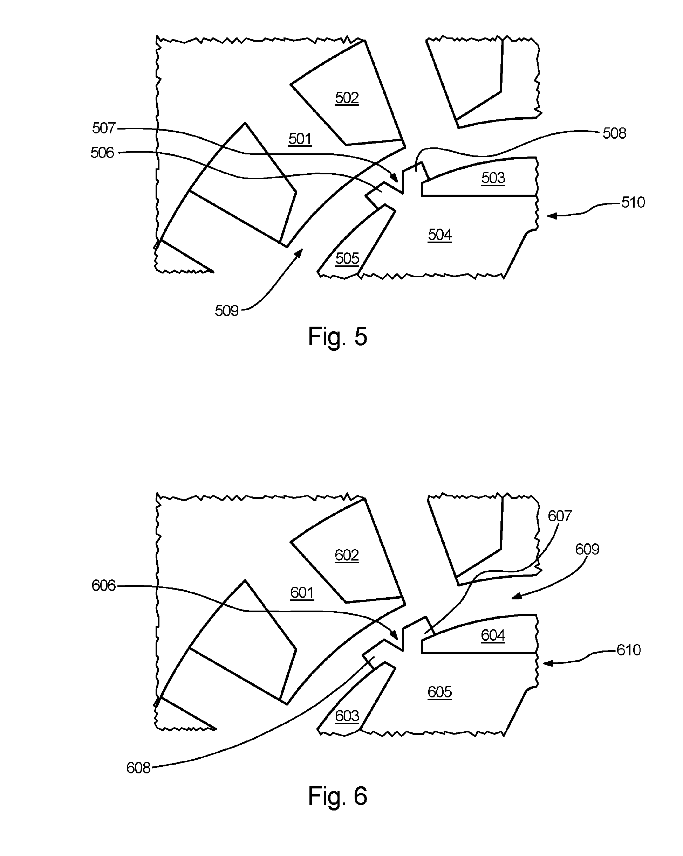

Fig. 5 zeigt einen Teil eines Querschnitts eines Permanentmagnetmotors mit einem Ständerpolschuh 501 und einer Ständerwicklung 502. Der Läufer 510 umfasst weichmagnetisches Material 504 und Permanentmagnete 503, 505, wobei das weichmagnetische Material 504 zumindest teilweise die zum Luftspalt gerichtete Oberfläche der Permanentmagneten 503, 505 bedecken kann. Der überlappende Bereich des weichmagnetischen Materials 504 kann als Flussleitstücke 506, 508 ausgebildet sein, wodurch im Vergleich zu vollständig freiliegenden Oberflächen der Permanentmagneten oder im Vergleich zu einer vollständigen Bedeckung der Permanentmagneten eine Reduzierung des Rastmoments erreicht werden kann. Zwischen benachbarten Flussleitstücken 506, 508 können Aussparungen 507 angeordnet werden, wodurch ein magnetischer Fluss zwischen benachbarten Permanentmagneten 503, 505 vermieden bzw. reduziert werden kann.

Fig. 6 zeigt einen Teil eines Querschnitts eines weiteren Permanentmagnetmotors, wobei der Läufer 610 Flussleitstücke 607, 608 aufweisen kann, die überlappend ausgebildet sind, um Permanentmagnete 603, 604 am Läufer 610 festklemmen zu können. Die Flussleitstücke 607, 608 können wie der Kern des Läufers 610 aus einem weichmagnetischen Material 605 bestehen. Der Permanentmagnetmotor kann Ständerpolschuhe 601 umfassen an denen Ständerwicklungen 602 angeordnet sein können. Im Vergleich zum Permanentmagnetmotor der Fig. 5 überlappen die Flussleitstücke 607, 608 einen größeren Abschnitt der Oberfläche der Permanentmagneten 603, 604.

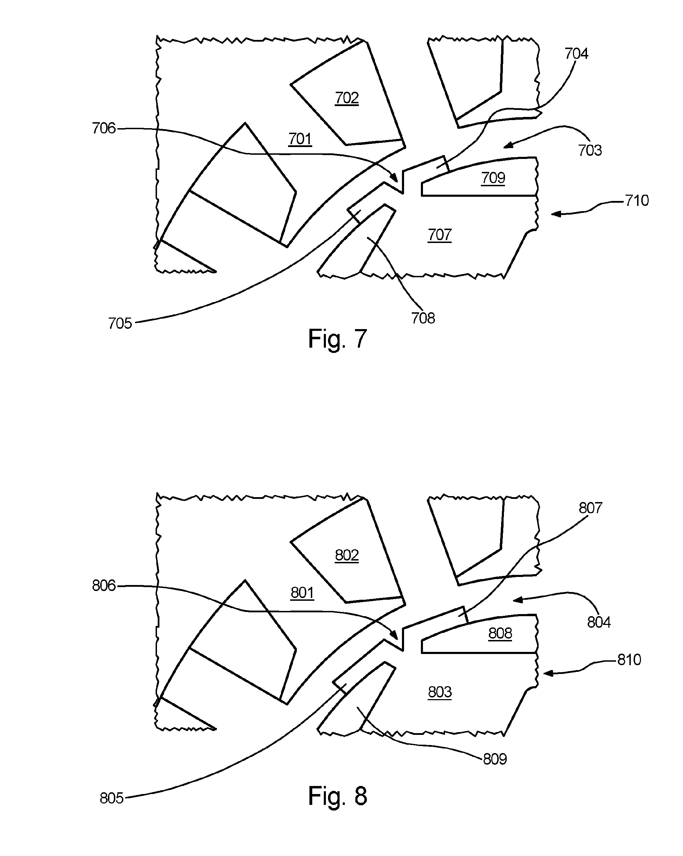

Fig. 7 zeigt einen Teil eines Querschnitts eines weiteren Permanentmagnetmotors, wobei im Vergleich zu den Fig. 5 und Fig. 6 die Flussleitstücke 704, 705 einen größeren Bereich der Permanentmagneten 708, 709 bedecken. Die mechanische Haltefunktion der Flussleitstücke 704, 705 des Läufers 710 kann dadurch erhöht werden, wodurch höhere Drehzahlen des Läufers 710 ermöglicht werden können.

Fig. 8 zeigt einen Teil eines Querschnitts eines weiteren Permanentmagnetmotors, wobei die Flussleitstücke 805, 807 im Vergleich zur Fig. 7 einen größeren Bereich der Permanentmagneten 808, 809 bedecken. Hierdurch kann die mechanische Haltefunktion der Flussleitstücke 805, 807 noch weiter gesteigert werden, wodurch sehr hohe Drehzahlen des Läufers 810 realisiert werden können, ohne dass die Gefahr bestehen würde, dass aufgrund von Fliehkräften die Permanentmagnete 808, 809 aus dem Läufer 810 geschleudert werden würden.

Es kann das Rastmoment eines Permanentmagnetmotors durch eine optimale Wahl der Größe der überlappenden Flussleitstücke minimiert werden. Wird die Größe des überlappenden Bereichs auf Null reduziert, so kann kein kleinstes Rastmoment erhalten werden. Bedecken die Flussleitstücke die Permanentmagnete vollständig, so wird ebenfalls kein kleinstes Rastmoment erzielt. Die Flussleitstücke müssen zumindest einen Abschnitt der Oberfläche der Permanentmagneten bedecken, dürfen aber nicht die gesamte Oberfläche überdecken, um ein kleinstes Rastmoment erreichen zu können. Beispielsweise können die Rastmomente der Permanentmagnetmotoren nach Fig. 5 und Fig. 8 ein im Vergleich zu den Permanentmagnetmotoren des Stands der Technik reduziertes Rastmoment aufweisen. Das Rastmoment der Permanentmagnetmotoren nach Fig. 6 und Fig. 7 kann im Vergleich zu den Permanentmagnetmotoren der Fig. 5 und Fig. 8 noch kleiner ausgebildet sein, wobei beispielsweise das Rastmoment des Permanentmagnetmotors nach Fig. 6 ein minimales Rastmoment aufweisen kann.

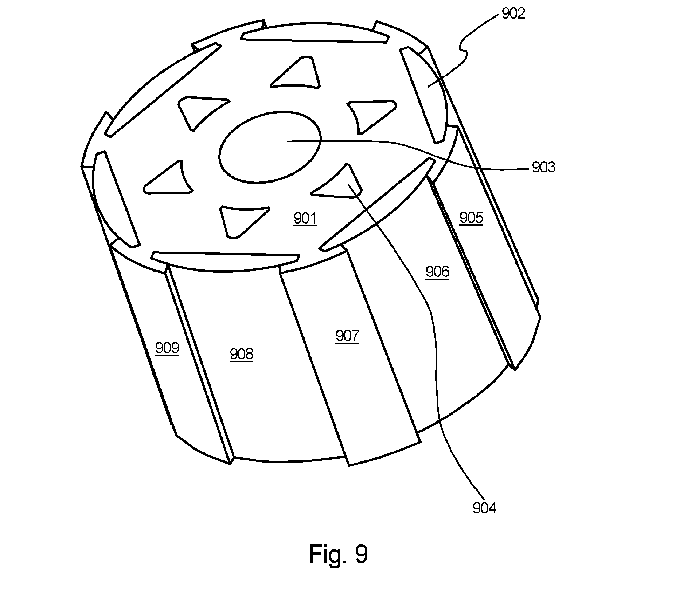

Fig. 9 zeigt eine perspektivische Ansicht eines erfindungsgemäßen Läufers mit einem Kern aus weichmagnetischem Material 901 in das Permanentmagnete 902, 906, 908 derart angeordnet sind, dass zumindest teilweise das weichmagnetische Material 905, 907, 909 die nach außen gerichtete Oberfläche der Permanentmagneten 902, 906, 908 bedecken kann. Der Läufer kann eine axial verlaufende Aussparung 903 aufweisen, die für eine Welle vorgesehen sein kann. In einer alternativen Ausführungsform kann der Läufer weitere beliebig geformte Aussparungen 904 umfassen, die auch axial verlaufend ausgebildet sein können, um z.B. eine Gewichtseinsparung ermöglichen zu können.

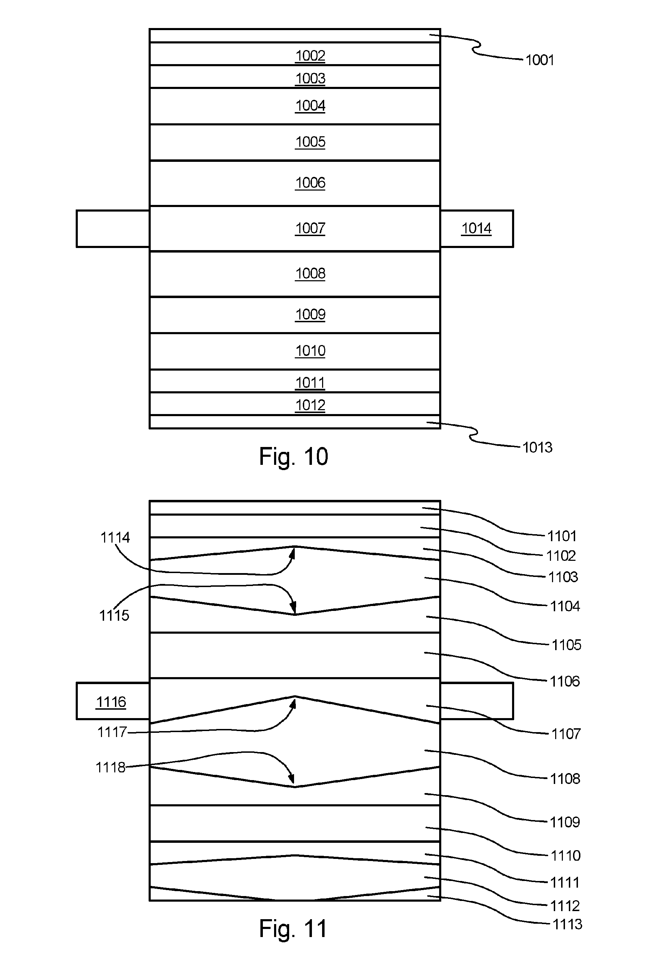

Fig. 10 zeigt eine Seitenansicht eines erfindungsgemäßen Läufers mit einer Welle 1014, weichmagnetischen Bereichen 1001, 1003, 1005, 1007, 1009, 1011, 1013 und eingefügten Permanentmagneten 1002, 1004, 1006, 1008, 1010, 1012, wobei die Permanentmagneten 1002, 1004, 1006, 1008, 1010, 1012 zumindest teilweise, aber nicht vollständig von dem weichmagnetischen Material 1001, 1003, 1005, 1007, 1009, 1011, 1013 bedeckt werden können.

Fig. 11 zeigt einen erfindungsgemäßen Läufer mit einer Welle 1116, weichmagnetischen Bereichen 1101, 1103, 1105, 1107, 1109, 1111, 1113 und Permanentmagneten 1102, 1104, 1106, 1108, 1110, 1112. Die weichmagnetischen Bereiche 1101, 1103, 1105, 1107, 1109, 1111, 1113 können die Permanentmagnete 1102, 1104, 1106, 1108, 1110, 1112 teilweise überdecken, wobei in axialer Richtung der Grad der Überdeckung allmählich variieren kann. In einer Ausführungsform der Erfindung kann sich entlang der axialen Richtung eine Einkerbung 1114, 1115, 1117, 1118 ergeben, wodurch eine mechanische Haltefunktion des weichmagnetischen Materials 1103, 1105, 1107, 1109, 1111, 1113 erzielt werden kann und außerdem durch die teilweise Überlappung der Permanentmagnete 1104, 1108, 1112 das Rastmoment im Vergleich zu einer vollständigen Überdeckung der Permanentmagnete oder zu einem vollständigen Freilassen der nach außen gerichteten Oberflächen der Permanentmagnete reduziert werden kann.

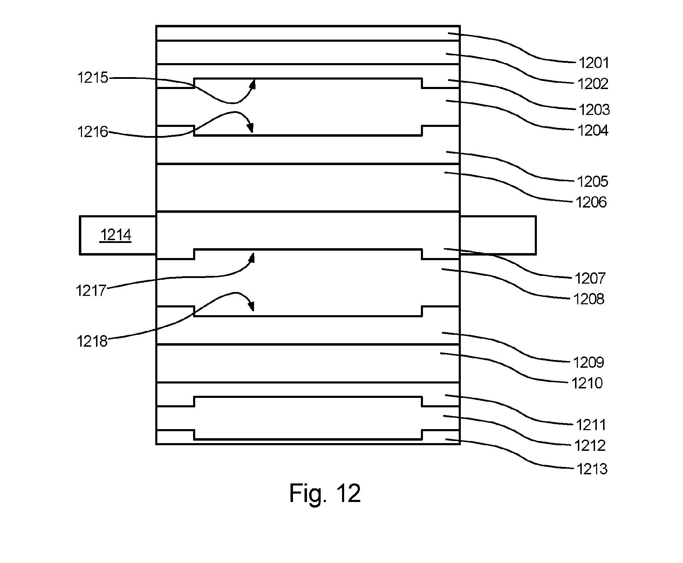

In einer alternativen Ausführungsform der Erfindung kann die Überlappung der Permanentmagnete 1204, 1208, 1212 durch das weichmagnetische Material 1203, 1205, 1207, 1209, 1211, 1213 entlang der axialen Richtung sprunghaft variieren. Fig. 12 zeigt in einer Seitenansicht einen erfindungsgemäßen Läufer mit weichmagnetischen Bereichen 1201, 1203, 1205, 1207, 1209, 1211, 1213 und Permanentmagneten 1202, 1204, 1206, 1208, 1210, 1212, wobei die weichmagnetischen Bereiche 1201, 1203, 1205, 1207, 1209, 1211, 1213 die Permanentmagnete 1202, 1204, 1206, 1208, 1210, 1212 teilweise überlappen können und diese Überlappung sich sprunghaft ändern kann. In einer alternativen Ausführungsform kann die Überlappung der Permanentmagnete gleichmäßig erfolgen, sodass z.B. sämtliche Überlappungen Aussparungen 1215, 1216, 1217, 1218 in axialer Richtung aufweisen können.

In einer weiteren alternativen Ausführungsform der Erfindung können Überlappungen vorhanden sein, die sich entlang der axialen Richtung allmählich ändern, wodurch sich z.B. Einkerbungen 1114, 1115, 1117, 1118 ergeben können, und/oder Überlappungen 1215, 1216, 1217, 1218, die eine sprunghafte Änderung entlang der axialen Richtung aufweisen, und/oder Überlappungen, die entlang der axialen Richtung konstant ausgeformt sind.

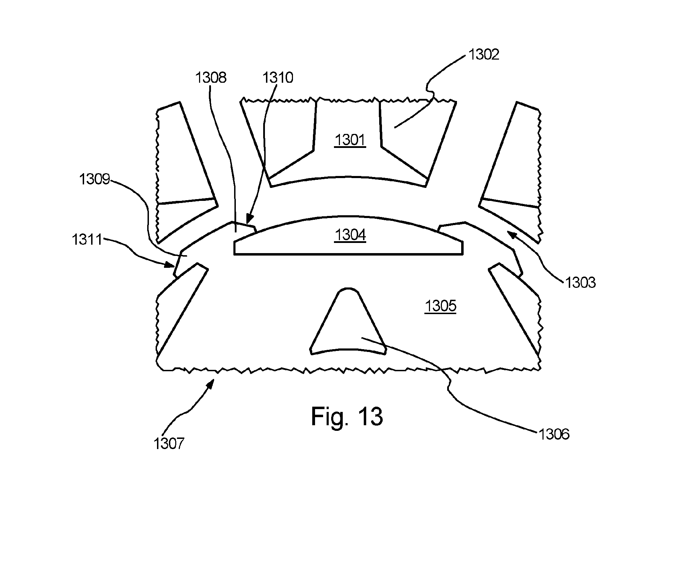

Fig. 13 zeigt eine alternative Ausführungsform eines Permanentmagnetmotors mit einem Ständerpolschuh 1301 und einer Ständerwicklung 1302 sowie einem Läufer 1307, der weichmagnetisches Material 1305 umfasst. In das weichmagnetische Material 1305 sind Permanentmagnete 1304 eingebettet, wobei Flussleitstücke 1308, 1309 einen Teil der zum Luftspalt 1303 gerichteten Oberfläche der Permanentmagneten 1304 bedecken. Die Flussleitstücke 1308, 1309 weisen bei dieser alternativen Ausführungsform abgeflachte Enden 1310, 1311 auf, wodurch das Rastmoment deutlich reduziert werden kann.

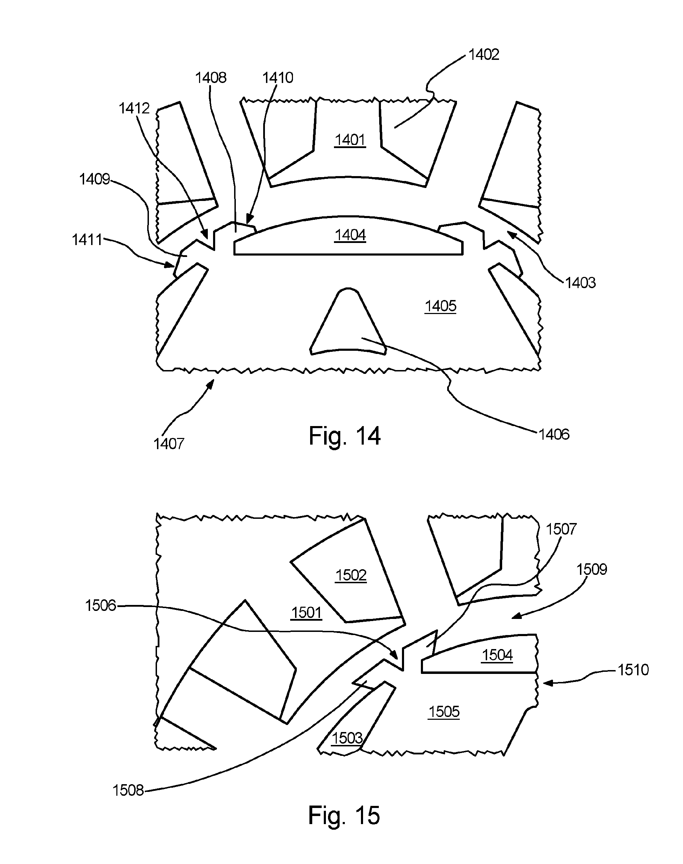

Fig. 14 zeigt eine weitere alternative Ausführungsform mit einem Ständer mit Ständerpolschuhen 1401 und Ständerwicklungen 1402 sowie einem Läufer 1407 mit Permanentmagneten 1404 und Flussleitstücken 1408, 1409, wobei die Flussleitstücke 1408, 1409 Abflachungen 1410, 1411 aufweisen. Ferner können zwischen den Flussleitstücken 1408, 1409 V-Einkerbungen 1412 angeordnet sein, die einen magnetischen Fluss zwischen benachbarten Permanentmagneten vermeiden oder zumindest reduzieren.

Fig. 15 zeigt eine alternative Ausführungsform eines erfindungsgemäßen Permanentmagnetmotors mit Flussleitstücken 1507, 1508, die konkav ausgeformte Enden aufweisen.

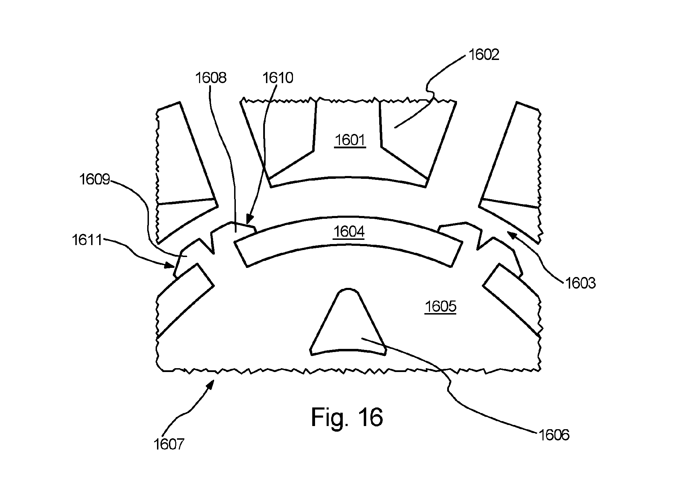

Fig. 16 zeigt eine weitere alternative Ausführungsform eines erfindungsgemäßen Permanentmagnetmotors mit einem Läufer, der Permanentmagnete 1604 aufweisen kann, wobei die Permanentmagnete 1604 als Oberflächenmagnete ausgebildet sein können, d.h. dass sie als räumlicher Bogen bzw. gebogener Quader ausgeformt sein können.

Vorteilhafterweise ist der erfindungsgemäße Permanentmagnetmotor skalierbar, d.h. es können beliebig viele Lamellen zusammengefasst werden, um beliebig lang gestreckte Motoren erhalten zu können, die ein nahezu beliebig großes Nutzdrehmoment bereitstellen können.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Permanentmagnet
- 102: Aussparung für Welle
- 103: Aussparung
- 104: weichmagnetisches Material
- 201: Ständerpolschuh
- 202: Ständerwicklung
- 203: Luftspalt
- 204: Permanentmagnet
- 205: weichmagnetisches Material
- 206: Aussparung
- 207: Läufer
- 301: Ständerpolschuh
- 302: Ständerwicklung
- 303: Luftspalt
- 304: Permanentmagnet
- 305: weichmagnetisches Material
- 306: Aussparung
- 307: Läufer
- 401: Ständerwicklung
- 402: Ständer
- 403: Permanentmagnet
- 404: Läufer
- 405: Flussleitstück
- 406: Aussparung
- 407: Flussleitstück
- 408: Aussparung
- 409: Flussleitstück
- 410: Ständerpolschuh
- 411: Permanentmagnet
- 501: Ständerpolschuh
- 502: Ständerwicklung
- 503: Permanentmagnet
- 504: weichmagnetisches Material
- 505: Permanentmagnet
- 506: Flussleitstück
- 507: Aussparung
- 508: Flussleitstück
- 509: Luftspalt
- 510: Läufer
- 601: Ständerpolschuh
- 602: Ständerwicklung
- 603: Permanentmagnet
- 604: Permanentmagnet
- 605: weichmagnetisches Material
- 606: Aussparung
- 607: Flussleitstück
- 608: Flussleitstück
- 609: Luftspalt
- 610: Läufer
- 701: Ständerpolschuh
- 702: Ständerwicklung
- 703: Luftspalt
- 704: Flussleitstück
- 705: Flussleitstück
- 706: Aussparung
- 707: weichmagnetisches Material
- 708: Permanentmagnet
- 709: Permanentmagnet
- 710: Läufer
- 801: Ständerpolschuh
- 802: Ständerwicklung
- 803: weichmagnetisches Material
- 804: Luftspalt
- 805: Flussleitstück
- 806: Aussparung
- 807: Flussleitstück
- 808: Permanentmagnet
- 809: Permanentmagnet
- 810: Läufer
- 901: weichmagnetisches Material
- 902: Permanentmagnet
- 903: Aussparung für Welle
- 904: Aussparung
- 905: weichmagnetisches Material
- 906: Permanentmagnet
- 907: weichmagnetisches Material
- 908: Permanentmagnet
- 909: weichmagnetisches Material
- 1001: weichmagnetisches Material
- 1002: Permanentmagnet
- 1003: weichmagnetisches Material
- 1004: Permanentmagnet
- 1005: weichmagnetisches Material
- 1006: Permanentmagnet
- 1007: weichmagnetisches Material
- 1008: Permanentmagnet
- 1009: weichmagnetisches Material
- 1010: Permanentmagnet
- 1011: weichmagnetisches Material
- 1012: Permanentmagnet
- 1013: weichmagnetisches Material
- 1014: Welle
- 1101: weichmagnetisches Material
- 1102: Permanentmagnet
- 1103: weichmagnetisches Material
- 1104: Permanentmagnet
- 1105: weichmagnetisches Material
- 1106: Permanentmagnet
- 1107: weichmagnetisches Material
- 1108: Permanentmagnet
- 1109: weichmagnetisches Material
- 1110: Permanentmagnet
- 1111: weichmagnetisches Material
- 1112: Permanentmagnet
- 1113: weichmagnetisches Material
- 1114: Aussparung
- 1115: Aussparung
- 1116: Welle
- 1117: Aussparung
- 1118: Aussparung
- 1201: weichmagnetisches Material
- 1202: Permanentmagnet
- 1203: weichmagnetisches Material
- 1204: Permanentmagnet
- 1205: weichmagnetisches Material
- 1206: Permanentmagnet
- 1207: weichmagnetisches Material
- 1208: Permanentmagnet
- 1209: weichmagnetisches Material
- 1210: Permanentmagnet
- 1211: weichmagnetisches Material
- 1212: Permanentmagnet
- 1213: weichmagnetisches Material
- 1214: Welle
- 1215: Aussparung
- 1216: Aussparung
- 1217: Aussparung
- 1218: Aussparung
- 1301: Ständerpolschuh
- 1302: Ständerwicklung
- 1303: Luftspalt
- 1304: Permanentmagnet
- 1305: weichmagnetisches Material
- 1306: Aussparung
- 1307: Läufer
- 1308: Flussleitstück
- 1309: Flussleitstück
- 1310: abgeflachtes Ende
- 1311: abgeflachtes Ende
- 1401: Ständerpolschuh
- 1402: Ständerwicklung
- 1403: Luftspalt
- 1404: Permanentmagnet
- 1405: weichmagnetisches Material
- 1406: Aussparung
- 1407: Läufer
- 1408: Flussleitstück
- 1409: Flussleitstück
- 1410: Abflachung
- 1411: Abflachung
- 1412: Einkerbung
- 1501: Ständerpolschuh
- 1502: Ständerwicklung
- 1503: Permanentmagnet
- 1504: Permanentmagnet
- 1505: weichmagnetisches Material
- 1506: Einkerbung
- 1507: Flussleitstück
- 1508: Flussleitstück
- 1509: Luftspalt
- 1510: Läufer
- 1601: Ständerpolschuh
- 1602: Ständerwicklung
- 1603: Luftspalt
- 1604: Permanentmagnet
- 1605: weichmagnetisches Material
- 1606: Aussparung
- 1607: Läufer
- 1608: Flussleitstück
- 1609: Flussleitstück
- 1610: Abflachung
- 1611: Abflachung

## Patentansprüche

1. Permanentmagnetmotor umfassend
einen Läufer (404), wobei der Läufer (404) weichmagnetisches Material und einen ersten Permanentmagneten (1104, 1108, 1112, 1204, 1208, 1212) umfasst und
einen Ständerpolschuh (410), wobei an dem Ständerpolschuh (410) eine Ständerwicklung (401) zur Erzeugung eines magnetischen Feldes angeordnet ist, wobei zwischen Läufer (404) und Ständerpolschuh (410) ein Luftspalt ausgebildet ist,
wobei
eine nach außen gerichtete Oberfläche des ersten Permanentmagneten (1104, 1108, 1112, 1204, 1208, 1212) durch ein erstes Flussleitstück (1101, 1103, 1107) aus weichmagnetischem Material teilweise bedeckt ist und wobei das erste Flussleitstück (1101, 1103, 1107) in axialer Richtung eine allmähliche Änderung (1114, 1115) oder eine sprunghafte Änderung (1215, 1216) der Überlappung der Permanentmagnete (1104, 1108, 1112, 1204, 1208, 1212) zur Reduzierung des Rastmoments aufweist.

2. Permanentmagnetmotor nach Anspruch 1, **dadurch gekennzeichnet, dass** das erste Flussleitstück in radialer Richtung ein abgeflachtes Ende (1310, 1311) aufweist.

3. Permanentmagnetmotor nach einem der Ansprüche 1 oder 2, **dadurch gekennzeichnet, dass** der erste Permanentmagnet (411) einen geometrischen Körper vom Typ eines Brotlaibs oder eines Quaders aufweist oder dass der erste Permanentmagnet ein Oberflächenmagnet ist.

4. Permanentmagnetmotor nach einem der vorhergehenden Ansprüche, **dadurch gekennzeichnet, dass** der Permanentmagnetmotor ein zweites Flussleitstück (409) aus weichmagnetischem Material umfasst, wobei der erste Permanentmagnet (411) durch das erste Flussleitstück (407) und das zweite Flussleitstück (409) teilweise bedeckt ist.

5. Permanentmagnetmotor nach Anspruch 4, **dadurch gekennzeichnet, dass** das erste Flussleitstück (407) zum zweiten Flussleitstück (409) symmetrisch oder unsymmetrisch bezüglich einer Schnittebene des Permanentmagnetmotors ausgebildet ist.

6. Permanentmagnetmotor nach einem der Ansprüche 4 oder 5, **dadurch gekennzeichnet, dass** durch das erste Flussleitstück (407) ein größerer Bereich des ersten Permanentmagneten (411) bedeckt ist als durch das zweite Flussleitstück (409).

7. Permanentmagnetmotor nach einem der vorhergehenden Ansprüche, **dadurch gekennzeichnet, dass** der Permanentmagnetmotor einen zweiten Permanentmagneten (403) umfasst, wobei eine nach außen gerichtete Oberfläche des zweiten Permanentmagneten (403) durch ein drittes Flussleitstück (405) aus weichmagnetischem Material teilweise bedeckt ist, wobei das erste Flussleitstück (407) und das dritte Flussleitstück (405) benachbart ausgebildet sind und zwischen dem ersten Flussleitstück (407) und dem dritten Flussleitstück (405) eine Aussparung (406) angeordnet ist.

8. Permanentmagnetmotor nach Anspruch 7, **dadurch gekennzeichnet, dass** die Aussparung (406) als V-Einkerbung, halbkreisförmig, halbkugelförmig, pyramidenförmig oder quaderförmig ausgeformt ist.

9. Permanentmagnetmotor nach einem der vorhergehenden Ansprüche, **dadurch gekennzeichnet, dass** die nach außen gerichtete Oberfläche des ersten Permanentmagneten (411) zu zwischen 5% und 50%, vorzugsweise zu zwischen 15% und 30%, weiter vorzugsweise zu zwischen 20% und 25% bedeckt ist.

10. Elektrowerkzeug umfassend einen Permanentmagnetmotor nach einem der vorhergehenden Ansprüche.

## Claims

1. Permanent magnet motor comprising a rotor (404) whereby the rotor comprises (404) soft magnetic material and a first permanent magnet (1104, 1108, 1112, 1204, 1208, 1212) and a frame-mounted pole piece (410), whereby a stator winding (401) for the generation of a magnetic field is placed on the frame-mounted pole piece (410) and whereby an air gap exists between the rotor (404) and the frame-mounted pole piece (410) and whereby the outward facing surface of the first permanent magnet (1104, 1108, 1112, 1204, 1208, 1212) is partially covered by a first flow modulator (1101, 1103, 1107) made of soft magnetic material and whereby the first flow modulator (1101, 1103, 1107) shows a gradual (1114, 1115) or abrupt change in end lap (1215, 1216) of the permanent magnets (1104, 1108, 1112, 1204, 1208, 1212) to achieve a reduction of the cogging torque.

2. Permanent magnet motor according to claim 1 **characterized by** the fact that the first flow modulator in axial direction has a truncated end (1310, 1311).

3. Permanent magnet motor according to claim 1 or claim 2 **characterized in that** the body of the first permanent magnet (411) has the geometry of a bread loaf or cuboid or alternatively, that the first permanent magnet is a surface magnet.

4. Permanent magnet motor according to any one of the above claims **characterized in that** the permanent magnet motor comprises a second flow modulator (409) made of soft magnetic material whereby the first permanent magnet (411) is partially covered by the first flow modulator (407) and the second flow modulator (409).

5. Permanent magnet motor according to claim 4 **characterized in that** the first flow modulator (407) is arranged symmetrically in relation to the second flow modulator (409) or asymmetrically in relation to an intersecting plane of the permanent magnet motor.

6. Permanent magnet motor according to claim 4 or claim 5 **characterized in that** the first flow modulator (407) covers a larger part of the first permanent magnet (411) than the second flow modulator (409).

7. Permanent magnet motor according to one of the above claims **characterized in that** the the permanent magnet motor comprises a second permanent magnet (403) whereby an outward facing surface of the second permanent magnet (403) is partially covered by a third flow modulator (405) made of soft magnetic material whereby the first flow modulator (407) and the third flow modulator (405) are located adjacent to each other and whereby a gap (406) exists between the first flow modulator (407) and the third flow modulator (405).

8. Permanent magnet motor according to claim 7 **characterized in that** the gap (406) is shaped like a 'V' notch, semi-circle, semi-sphere, pyramid or cuboid.

9. Permanent magnet motor according to one of the above claims **characterized in that** between 5 % and 50 %, preferentially between 15 % and 30 % and further preferentially between 20 % and 25 % of the outward facing surface of the first permanent magnet (411 is covered).

10. Electric tools comprising a permanent magnet motor according to one of the above claims.

## Revendications

1. Moteur à aimant permanent comprenant un rotor (404), où le rotor (404) contient du matériau magnétique doux et un premier aimant permanent (1104, 1108, 1112, 1204, 1208, 1212) et un
épanouissement polaire du stator (410), où le l'épanouissement polaire du stator (410) comprend un enroulement statorique (401) pour la production d'un champ magnétique, et où il y a entre le rotor (404) et l'épanouissement polaire du stator (410) un entrefer, où une surface orientée vers l'extérieur du premier aimant permanent (1104, 1108, 1112, 1204, 1208, 1212) est partiellement couverte par une première pièce conductrice de flux (1101, 1103, 1107) en matériau magnétique doux et où la première pièce conductrice de flux (1101, 1103, 1107) présente en sens axial un changement
progressif (1114, 1115) ou un changement brusque (1215, 1216) du recouvrement des aimants permanents (1104, 1108, 1112, 1204, 1208, 1212) pour la réduction des couples de saillance.

2. Le moteur à aimant permanent selon revendication 1, se **caractérise par le fait, que** la première
pièce conductrice de flux présente dans le sens radial une extrémité aplatie (1310, 1311).

3. Moteur à aimant permanent selon l'une des revendications 1 ou 2, **caractérisé par le fait, que** le premier aimant permanent (411) présente une forme géométrique du type d'une miche de pain ou d'un parallélépipède rectangle ou **par le fait que** le premier aimant permanent est un aimant en surface.

4. Moteur à aimant permanent selon l'une des revendications précédentes, **caractérisé par le fait, que** le Moteur à aimant permanent comprend une seconde pièce conductrice de flux(409) en matériau d'amant doux, où le premier moteur à aimant permanent (411) est couvert partiellement par la première pièce conductrice de flux (407) et la seconde pièce conductrice de flux (409).

5. Moteur à aimant permanent selon la revendication 4, **caractérisé par le fait, que** la première pièce conductrice de flux (407) est symétrique ou asymétrique par rapport à la seconde pièce conductrice de flux (409) par rapport à un plan de découpe du moteur à aimant permanent.

6. Moteur à aimant permanent selon l'une des revendications 4 ou 5, **caractérisé par le fait, que** la première pièce conductrice de flux (407) couvre une partie plus grande du premier aimant permanent (411) que la seconde pièce conductrice de flux (409).

7. Moteur à aimant permanent selon l'une des revendications précédentes, **caractérisé par le fait, que** le moteur à aimant permanent comprend un second aimant permanent (403), où une surface orientée vers l'extérieur du second aimant permanent (403) est partiellement couvert par un troisième pièce conductrice de flux (405) en matériau magnétique doux , où la première pièce conductrice de flux (407) et la troisième pièce conductrice de flux (405) sont disposées l'une à côté de l'autre et entre la première pièce conductrice de flux (407) et la troisième pièce conductrice de flux (405) a été prévu une encoche (406).

8. Moteur à aimant permanent selon revendication 7, **caractérisé par le fait que** l'encoche (406) en forme d'encoche en V, en demi-cercle, hémisphérique, pyramidal ou en forme de parallélépipède.

9. Moteur à aimant permanent selon l'une des revendications précédentes, **caractérisé par le fait, que** la surface orientée vers l'extérieur du premier aimant magnétique (411) couverte entre 5 % et 50 %, de préférence entre 15 % et 30 %, et de préférence entre 20 % et 25 %.

10. Outils électriques comprenant un moteur à aimant permanent selon l'une des revendications précédentes.
